# EUROPEAN PATENT APPLICATION

(11) **EP 1 561 787 A1**
(43) Date of publication of application: **10.08.2005**
(21) Application number: 03772764.1
(22) Date of filing: 14.11.2003
(51) Int. Cl.: C09D 5/03, C09D 5/29, C09D 201/00, C09D 193/02, B05D 7/24, B05D 5/06, B05D 1/04

(54) **POWDER COATING, METHOD FOR PRODUCTION THEREOF, METHOD FOR USING SAID POWDER COATING AND COATED ARTICLE**

(30) Priority: 14.11.2002 JP 2002331027
(71) Applicant: Kansai Paint Co., Ltd., Amagasaki-shi, Hyogo 661-8555 (JP); Kuboko Paint Co., Ltd., Osaka-shi, Osaka 533-0031 (JP)
(72) Inventor: OHKOSHI, Toshio c/o Kansai Paint Co., Ltd., Ohta-ku, Tokyo 144-0045 (JP); KAWAMOTO, Yugen c/o Kansai Paint Co., Ltd., Hiratsuka-shi, Kanagawa 254-8562 (JP); HARADA, Masayoshi c/o Kuboko Paint Co., Ltd., Osaka-shi, Osaka 533-0031 (JP); IMOSE, Manabu c/o Kuboko Paint Co., Ltd., Osaka-shi, Osaka 533-0031 (JP)
(74) Representative: Müller-Boré & Partner Patentanwälte
(86) International application number: PCT/JP2003/014492
(87) International publication number: WO 2004/044065

(57) **Abstract**

The present invention provides a powder paint excellent in productivity and cost, because the powder paints that are not adhered to the substrate can recovered and reused. And in case of using the powder paint of the present invention, coating efficiency is high and fine textured coated films excellent in attractiveness of appearance and water resistance can be obtained, because the base paint powder and the pigment particle thereof hardly separate. The powder paints of the present invention are **characterized in that** the pigment particles are bound to the base paint powders via shellac. The powder paints of the present invention not only allow uniform and firm binding of pigment particles to base paint powders by the action of shellac, but also provide the resulting coated films with excellent attractiveness of appearance.

## Description

### TECHNICAL FIELD

The present invention relates to a powder paint excellent in attractiveness of appearance (particularly, metallic and pearl appearance), a process of producing the same, a process of forming coated films using the powder paint, a process of producing coated products, and a coated product. In particular, the powder paints according to the present invention are excellent in coating efficiency; provide uniform coated films excellent in attractiveness of appearance and water resistance; and further are excellent in productivity and cost effectiveness as the powder paints can be recovered and reused.

### BACKGROUND ART

Hitherto commonly used for painting is the method of applying a liquid paint wherein paint ingredients are dissolved in organic solvents onto a substrate and then evaporating the organic solvent. However, the method carries the problem of harmful organic solvent being evaporated, thereby exerting adverse effects on humans and the environment. In order to suppress the emission of these volatile organic substances (VOC), there is a trend toward the replacement by powder paints that allow coating without the use of organic solvents. In addition, powder paints have the advantages that the characteristics thereof can be easily modified by properly selecting suitable resins from a variety of synthetic resins as the main component of the paint powders and that the thickness of the coated films can be freely controlled, allowing coating of thicker films.

To these powder paints, pigments having a variety of characteristics are added as the ingredients for the purpose of improving the attractiveness of appearance of coated films. For example, various powder paints having novel characteristics are now under development or in production that contain not only extender pigments and coloring pigments for the purpose of providing colors but also bright pigments and phosphorescent pigments.

As the process for producing such powder paints, a method of kneading a pigment with a paint, more specifically, a method of melt-kneading a paint composition containing pigments and the like and subsequently pulverizing the resulting composition (melt-kneading/pulverization method) has been employed.

However, the melt-kneading/pulverization method had the problem that the pigments, especially bright pigments, are broken down during melt-kneading, leading to decrease in the attractiveness of appearance of coated films, as the ingredients are dispersed uniformly by kneading the composition under shearing force at the melting temperature of the resins. For example, when an aluminum powder is used as the bright pigment, the aluminum powder is broken down by the shearing force and discolored to black or gray during the melt-kneading process. Accordingly, coating of the bright powder paints containing such broken-down aluminum powders do not allow production of bright coated films having metal brilliance any more.

To solve the problem, a method wherein the base paint powders are first produced by the melt-kneading/pulverization method and then bright pigments or the like are blended to the resulting base paint powders (dry blending method) has been employed in production of such powder paints. This dry blending method is a method wherein powder paint compositions, containing resins and, if desired, some additives including coloring pigments and the like, are previously melt-blended to give paint particles, and pigments and the particles are simply mechanically blended without the resins being melted to give powder paints. Therefore, the pigments are not subjected to high temperature and great shearing force. As the result, powder paints that retain the original characteristics of the pigments can be produced.

However, the powder paints produced by this method (dry blending method), having relatively lower binding force between the paint particles and pigments, cause some problems associated with the operating efficiency during commercial scale coating and the characteristics of the resulting coated films. Namely, the separation of the paint particles and pigments during the coating operation affects the attractiveness of appearance due to decrease in pigments present in the coated films, or makes the reuse of the recovered paints more difficult.

For example, when a resin-coated aluminum powder is used as the pigment, the paint particles and aluminum powders in the powder paint separate due to the difference in electrostatic characteristics during coating by using a corona discharge electrostatic spray coater, and the aluminum powders adhere to the voltage application needles and the vicinity thereof located at the tip of the corona discharge electrostatic spray coater. Consequently, the amount of aluminum powders contained in the coated films becomes smaller than that in the original powder paints, and it becomes difficult to obtain coated films having sufficient metal brilliance and excellent in attractiveness of appearance. Pearl pigments, exhibiting the similar phenomena more profoundly, only provide coated film less attractive in appearance. In addition, the paints that are not adhered to substrates have a smaller amount of pigments than the original paint and provides only coated films less attractive in appearance, and accordingly cannot be recovered and reused, demanding greater economic burden especially in production of coated films in large quantity. Further, if the masses of pigments adhered onto the needles or the vicinity thereof of the electrostatic spray coater happen to fall on the substrate, protrusions (spits) are formed on the coated surface, causing the problem of drastically damaging the appearance of the coated film.

As the process of producing powder paints that can solve the problems associated with the breakdown of pigments and the spits and provide coated films more attractive in appearance, the "heat mixing method", whereby the paint powders and pigments are blended while mild heating, was developed. However, as the demands of consumers escalate, the heat mixing method cannot always provide coated films sufficiently attractive in appearance, and accordingly there exists a need for powder paints that provide coated films having an attractiveness of appearance at an increased level.

Incidentally, Japanese Unexamined Patent Publication No. 2002-235039 discloses a bright powder paint composition dispersed in a non-aqueous solvent, wherein the powder paint solid resin particles and bright pigments are dispersed in a non-aqueous medium having insolubility or poor solubility for the solid resin particles. And this bright powder paint composition dispersed in a non-aqueous solvent can be recovered and reused by collecting the oversprayed paints. However, the bonding between the powder paint solid resin particles and the bright pigments is extremely weak as they are simply blended; if the paints that are not adhered to the substrate are to be recovered and reused, it is unlikely that the amount of bright pigments in the recovered paints is constant all the time and such recovered paint provides coated films attractive in appearance in such an extent as that of the original films.

### DISCLOSURE OF THE INVENTION

An object of the present invention is to provide a powder paint excellent in productivity and cost, wherein the base paint powder and the pigment particle thereof hardly separate, thus allowing high coating efficiency, production of coated films excellent in attractiveness of appearance and water resistance, and recovery and reuse of the powder paints that are not adhered to the substrate. And an object of the present invention is to provide a process of producing the powder paint, and a process of using the same.

The present inventors devised earlier a process of producing a bright powder paint that provides a coated film excellent in attractiveness of appearance (Japanese Patent Application No. 2002-271904) . According to the method, a bright powder paint wherein a paint powder and a flake-like pigment powder are homogeneously and firmly bound to each other can be produced by the steps comprising, at least, blending the paint powder and flake-like pigment (bright pigment); blending the resulting mixture with a liquid bonding auxiliary agent: and drying. Such powder paints have high coating efficiency, allow the recovery and reuse thereof, and provide coated films highly attractive in appearance.

After an intensive study to further improve the method above, the present inventors have found that the use of a shellac solution as a bonding auxiliary agent allows production of coated films smaller in unevenness and excellent in attractiveness of appearance and water resistance, and that the beneficial effect thereof can be used for improvement of other powder paints that contain pigments other than bright pigments, and completed the present invention.

Namely, the powder paints according to the present invention are characterized in that the powder paints are excellent in attractiveness of appearance and the pigment particles therein are bound via shellac to the base paint powders therein. The powder paints according to the present invention, wherein the pigment particles are uniformly and firmly bound to the base paint powders due to the composition above, show a high coating efficiency, provide coated films excellent in attractiveness of appearance and water resistance, and allow the recovery and reuse of the powder paints that are not adhered to the substrate.

The content of shellac in this powder paint is preferably 0.01 to 1 mass % with respect to the total amount of the powder paint. It is because the presence of shellac within this range leads to higher dispersion of the ingredients and more favorable evenness of the resulting coated films and provides coated films further more improved in attractiveness of appearance.

The average diameter of the base paint powders is preferably 10 to 100µm, and the average diameter of the pigment particles is preferably not more than 100µm.

With the average diameters in these ranges, the binding between the pigment particles and base paint powders becomes more uniform under the action of shellac, and the coated surfaces become more attractive in appearance. Typical examples of the pigment particles include bright pigments having an average diameter of 2 to 100µm, especially bright pigments in the shape of flake having a thickness of 0.01 to 10µm; inorganic coloring pigments having an average diameter of 0.01 to 5.0µm; organic coloring pigments having an average diameter of 0.01 to 1.0µm; and phosphorescent pigments having an average diameter of 1 to 100µm; and these pigment particles may be used alone or in combination of two or more.

The content of the pigment particles with respect to the total amount of the powder paint is preferably 0.1 to 50 mass %. It is because the pigment particles present in the amount within this range increase the attractiveness of appearance more efficiently.

The process of producing powder paints according to the present invention is characterized in comprising the steps of: blending the base paint powder and the pigment particle; blending the resulting mixture with a liquid bonding auxiliary agent wherein shellac is dissolved in an organic solvent; and drying. The aforementioned powder paints can be produced in the process comprising least these steps.

In the aforementioned step of blending a liquid bonding auxiliary agent, a mechanically agitating blender or airstream fluidized blender is generally used.

The liquid bonding auxiliary agent is preferably added by spraying or dropwise addition. By such a adding method, the liquid bonding auxiliary agent can be added uniformly in smaller portions to the mixture of the base paint powders and pigment particles, thus allowing uniform binding of the pigment particles to the base paint powders.

When the bonding auxiliary agent is added by spraying, it is preferable to use the mode wherein the step of spraying the liquid bonding auxiliary agent is carried out concurrently with the step of drying by supplying air. By this manner the adhesion and binding between the pigment particles and the base paint powders proceed simultaneously, allowing production of the powder paint in a shorter period. In such a case, the use of heated air as the air enables even faster production.

The process of forming coated films according to the present invention is characterized in that the coated film is formed by electrostatic powder coating of the powder paint described above onto a substrate made of metal material. According to the process, the base paint powders and the pigment particles do not separate and provide uniform coated films highly attractive in appearance, even by the electrostatic powder coating method that is suitable for metal substrates but tends to cause separation of pigment particles from the base paint powders.

A primer layer is preferably formed in advance to the electrostatic powder coating. The presence of the primer layer between the metal materials and the coated films can increase the corrosion resistance and durability of the metal materials. In addition, the presence of a colored primer layer could further increase the attractiveness of appearance, selecting proper combination of the color with the hue of the base layer.

The use of powder paint for forming of the primer layers can lead to reduction in the emission of harmful volatile organic substances.

The powder paint to be used for forming the primer layers is preferably those having epoxy resin hardening-type polyester resins or acid hardening-type epoxy group-containing acrylic resins as the main component of the base paint powder. The use of these powder paints allows formation of hardened coated films, and especially the use of the former resins provides coated films excellent in corrosion resistance, and the latter, in weatherability.

In the process of forming coated films described above, it is preferable to form a top clear layer as the utmost outer layer. Such a top clear layer further increases the appearance of the coated films such as brilliance and evenness and the performance of the coated films including weatherability, or the like.

Preferably, the top clear layers are formed with an acrylic solvent-based clear paint or an acrylic powder-based clear paint: the acrylic solvent-based clear paint is preferably polyisocyanate hardening-type clear paint; while the acrylic powder-based clear paint is acid hardening-type clear paint having epoxy groups, or those having epoxy group-containing acrylic resins as the main resin and containing a polycarboxylic acid (preferably, dodecanedicarboxylic acid) as a curing agent. The acrylic solvent-based clear paints are excellent in weatherability, while the acrylic powder-based clear paint is excellent in weatherability and at the same time allow reduction in the emission of harmful volatile organic substances. The process of producing a coated product according to the present invention is a process of producing a coated product coated with a powder paint characterized in comprising a step of coating the aforementioned powder paint onto a substrate made of metal material by electrostatic powder coating. The process of producing a coated product according to the present invention is an application of the process of forming coated films described above and has similar characteristics to the process of forming coated films described above. Additionally, the suitable embodiments of the process of producing coated products described above may be applied to the process of producing coated products according to the present invention, and the same is true for the operation and effect thereof as well.

Further, the coated product according to the present invention is characterized in being produced by the method described above.

### DESCRIPTION OF THE PREFERRED EMBODIMENTS

The largest advantage of the powder paint according to the present invention is that the pigment particles are bound uniformly to the base paint powders and thus the powder paint provides coated film of fine and uniform texture excellent in attractiveness of appearance. If the base paint powders and the pigment particles, two main ingredients of the powder paint, are distributed unevenly, colored pigments provide coated films having a mottled appearance, and phosphorescent pigments those that cannot emit light uniformly. Particularly in the case of bright pigments, the resulting coated films have black spots, which cannot reflect light, due to the absence of pigments. Coated films have a greater these spots are less attractive in appearance. On the other hand, uniform and firm binding between the pigment particles and base paint powders in the powder paint of the present invention prevents facile separation of the pigment particles from the base paint powders during coating, and thus provides coated films strikingly more attractive in appearance. Furthermore, the powder paint of the present invention not only allows recovery and reuse but also provides coated films excellent in water resistance.

Hereinafter, the embodiments and technical merits of the present invention for offering the advantages described above will be described.

First, the "base paint powder" used in the present invention will be described.

The "paint powders" used as the "base paint powders" of the present invention are those used conventionally as powder paints, which are produced by melt-blending a paint composition containing a film-forming resin, and added if desired a coloring pigment, an extender pigment and other additives, and pulverizing the resulting compound into powders, according to any one of the processes known in the art.

The "film-forming resins" used as the paint powders include thermosetting resins, thermoplastic resins, and the like commonly used hitherto as the film-forming resins for powder paints, but are generally thermosetting resins. Examples of the "thermosetting resins" include: (i) combinations of a hydroxyl group-containing solid resin and a curing agent having functional groups that cause a hardening reaction with the hydroxyl groups under heat; (ii) combinations of a carboxyl group-containing solid resin and a curing agent having functional groups that cause a hardening reaction with the carboxyl groups under heat; and (iii) combinations of an epoxy group-containing solid resin and a curing agent having functional groups that cause a hardening reaction with the epoxy groups under heat. The "solid" resin means a resin that is in solid state at room temperature, preferably having a softening point of 80 to 200°C. The curing agents to be used may be solid or liquid, but are preferably solid.

As the "hydroxyl group-containing solid resins", publicly known resins commonly used for powder paints such as hydroxyl group-containing acrylic resins and hydroxyl group-containing polyester resins can be used. As the "curing agents having functional groups that cause a hardening reaction with hydroxyl groups under heat" to be used in combination with the hydroxyl group-containing solid resins, publicly known curing agents commonly used for powder paints such as blocked polyisocyanate compounds and aminoplast resins may be used.

As the "carboxyl group-containing solid resins", publicly known resins commonly used for powder paints such as carboxyl group-containing acrylic resins and carboxyl group-containing polyester resins may be used. As the "curing agents having functional groups that cause a hardening reaction with carboxyl groups under heat" to be used in combination with the carboxyl group-containing solid resins, publicly known curing agents used for powder paints: for example, epoxy resins such as bisphenol A - epichlorohydrin-type epoxy resins, alicyclic epoxy resins, novolak-type epoxy resins, and epoxy group-containing acrylic resins; hydroxyalkylamide compounds; and the like may be used.

As the "epoxy group-containing solid resins", publicly known resins used for powder paints: for example, bisphenol A - epichlorohydrin-type epoxy resins, alicyclic epoxy resins, novolak-type epoxy resins, epoxy group-containing acrylic resins, and the like may be used. As the "curing agents having functional groups that cause a hardening reaction with epoxy groups under heat" to be used in combination with the epoxy group-containing solid resins, publicly known curing agents used for powder paints: for example, carboxyl group-containing polyester resins, organic acid polyhydrazide compounds, imidazole compounds, dicyandiamide compounds, polycarboxylic acid compounds, acid anhydrides, and the like may be used.

Among thermosetting resins exemplified above, the following combinations are preferable as they allow production of coated films excellent in performance (weatherability, or the like), finish (attractiveness of appearance, smoothness, or the like.), or the like.

### (iv) Combination of a hydroxyl group-containing polyester resin and a blocked polyisocyanate compound

The hydroxyl group-containing polyester resins to be used are preferably those having a hydroxyl value of about 20 to 200 KOH mg/g, preferably about 25 to 80 KOH mg/g; a softening point of about 50 to 150°C, preferably about 70 to 140°C; and a weight-average molecular weight of about 1,000 to 10,000, preferably about 2,000 to 5,000. Typical examples of the hydroxyl group-containing polyester resins are those obtained by reacting an aromatic or alicyclic dicarboxylic acid such as phthalic acid (or its anhydride), isophthalic acid, terepnthalic acid, dimethyl isophthalate, dimethyl terephthalate, hexahydrophthalic acid (or its anhydride), tetrahydrophthalic acid (or its anhydride), or the like; and a bivalent alcohol such as (poly)ethylene glycol, (poly)propylene glycol, butylene glycol, neopentyl glycol, 1,6-hexanediol, dimethylpropionic acid or the like; and additionally if desired, a monocarboxylic acid such as benzoic acid or the like; a trivalent or higher-valent carboxylic acid such as trimellitic acid (or its anhydride) or the like; and a trivalent or higher-valent alcohol such as trimethylolethane, trimethyrolpropane, glycerin, pentaerythritol, or the like; so that the resins have a hydroxyl value in the range described above.

The blocked polyisocyanate compounds are, for example, those obtained by blocking the isocyanate groups in an aliphatic or alicyclic polyisocyanate compound such as trimethylene diisocyanate, isophorone diisocyanate, hydrogenated xylylene diisocyanate, or the like, with a compound such as phenols, lactams, alcohols, oximes or the like. The compound obtained by blocking all isocyanate groups in isophorone diisocyanate so that there is no free isocyanate group left with a lactam-derived blocking agent such as ε-caprolactam or the like is particularly preferred.

### (v) Combination of a carboxyl group-containing polyester resin and a hydroxyalkylamide compound

The carboxyl group-containing polyester resins to be used are preferably those having a resin acid value of 20 to 200 KOH mg/g, preferably about 25 to 150 KOH mg/g; a softening point of about 50 to 150°C, preferably about 70 to 140°C; and a weight-average molecular weight of about 1,000 to 10,000, preferably about 2,000 to 5,000. Typical examples of the carboxyl group-containing polyester resins are those obtained by reacting an aforedescribed aromatic or alicyclic dicarboxylic acid and an aforedescribed bivalent alcohol, and additionally if desired, a monocarboxylic acid such as benzoic acid or the like; a trivalent or higher-valent carboxylic acid (or its anhydride) such as trimellitic acid or the like; and a trivalent or higher-valent alcohol such as trimethylolethane, trimethyrolpropane, glycerin, pentaerythritol or the like; so that the resins have an acid value in the range described above.

### (vi) Combination of a carboxyl group-containing polyester resin and an epoxy resin

The carboxyl group-containing polyester resins to be used are, for example, those similar to resins (v) above. The epoxy resins have preferably an epoxy equivalence of 200 to 3, 000, preferably 300 to 2, 000; and a softening point of about 20 to 200°C, preferably about 30 to 150°C. Typical examples of the epoxy resins include bisphenol A-type epoxy resins, bisphenol F-type epoxy resins, bisphenol B-type epoxy resins, acrylic epoxy resins, brominated epoxy resins, cyclic aliphatic epoxy resins (epoxy resins having cylcohexene oxide groups, tricyclodecene oxide groups, cyclopentene oxide groups or the like), and the like. From the viewpoint of hardenability, among the resins above, bisphenol A - epichlorohydrin-type epoxy resins are particularly preferable, and specific examples thereof include AER-6014 (brand name of Asahi Kasei Corp.), Epikote 1004, Epikote 1007 (hitherto, brand names of Japan Epoxy Resins Co., Ltd), Araldite 6084, Araldite 6097, Araldite 6099 (hitherto, brand names of Ciba-Geigy Corp.), DER-664, DER-667 (hitherto, brand names of Dow Chemical Com.), and the like.

### (vii) Combination of an epoxy group-containing acrylic resin and a polycarboxylic acid compound

The epoxy group-containing acrylic resins to be used are preferably those having an epoxy equivalence of 200 to 3,000, preferably 300 to 2,000; and a softening point of about 20 to 200°C, preferably about 30 to 150°C. Typical examples of the epoxy group-containing acrylic resins are epoxy group-containing acrylic resins obtained by radical copolymerization reactions of an epoxy group-containing radically polymerizable unsaturated monomer (e.g., glycidyl (meth) acrylate, methylglycidyl (meth) acrylate, or the like) as an essential monomer ingredient with, for example, methyl methacrylate, ethylmethacrylate, isobutyl methacrylate, tert-butyl methacrylate, tert-butyl acrylate, methyl acrylate, ethyl acrylate, n-butyl methacrylate, isobutyl acrylate, 2-ethylhexyl (meth)acrylate, stearyl methacrylate, styrene, vinyltoluene, α -methylstyrene, (meth)acrylonitrile, (meth)acrylamide, hydroxyethyl (meth)acrylate, hydroxypropyl (meth)acrylate or the like.

The polycarboxylic acid compounds are, for example, dodecanedicarboxylic acid, decanedicarboxylic acid, adipic acid, sebacic acid and the like.

### (viii) Combination of a hydroxyl group-containing acrylic resin and a blocked polyisocyanate compound

The hydroxyl group-containing acrylic resins to be used are preferably those having a hydroxyl value of about 20 to 200 KOH mg/g, preferably about 25 to 80 KOH mg/g; a softening point of about 50 to 150°C, preferably about 70 to 140°C; and a weight-average molecular weight of about 1,000 to 100,000, preferably about 2,000 to 80,000. Examples of the hydroxyl group-containing acrylic resins include those obtained by radical copolymerization reactions of a hydroxyl group-containing radically polymerizable unsaturated monomer such as above-described hydroxyethyl (meth)acrylate, hydroxypropyl (meth) acrylate or the like as an essential monomer ingredient, with another monomer other than the hydroxyl group-containing radically polymerizable unsaturated monomer (e.g., monomers described as the constituent of the aforementioned epoxy group-containing acrylic resins). The blocked polyisocyanate compounds exemplified in (iv) above can be used.

The "coloring pigments" to be used in the paint powders are, for example, inorganic or organic coloring pigments such as titanium dioxide, iron oxide, iron oxide red, carbon black, phthalocyanine blue, phthalocyanine green, quinacridone pigments, isoindolinone pigments, azo pigments, Acetron pigments, various calcined pigments, and the like. The "extender pigments" to be added in the paint powders are, for example, calcium carbonate, glass fiber, silica, talc, sulfuric acid barium, kaolin, and the like. In addition, anti-corrosive pigments such as zinc powder, aluminum dihydrogen tripolyphosphate, and the like may also be used if desired. These pigments are listed here only as examples and it should be understood that the coloring pigments of the present invention are not limited thereto.

The "additives" include, for example, surface modifiers, hardening accelerators, anti-sagging agents, UV absorbents, photostabilizers, antioxidants, dyes, and the like, and may be additionally used if desired.

The paint compositions thus prepared containing the resins above and additionally the coloring pigments, additives and the like if desired are then kneaded into homogeneity at the temperature of the resin being melted. The paint pellets obtained are pulverized and then screened to give base paint powders having an average diameter of about 10 to 100µm, preferably 20 to 60µm.

In the present invention, the "average diameter" means the particle size at the integrated value of 50% from the smallest particle size (D₅₀) when the particle size distribution of the base paint powders or pigment particles after screening is determined by a common particle size distribution analyzer. The particle size distribution can be determined by analyzing the strength and pattern of diffracted and scattered light when light is irradiated to particles. It is because the strength and pattern of the diffracted and scattered light depends on the size of the particles. Examples of the particle size distribution analyzers are Microtrac 9220 FRA and Microtrac HRA of Nikkiso Co., Ltd; Coulter Murtisizer of Beckmann Coulter, Inc.; and the like. In a typical example of the measurement method, the particle size distribution is determined by the following way: into a container containing a well stirred solution of 0.01 to 0.1g of a neutral detergent in 30ml of water, added is 0.01 to 0.2g of a sample; the suspension is dispersed for 2 minutes under ultrasonic irradiation while stirring; and the particle size distribution is measured by one of the particle size distribution analyzers above.

Next, the "pigment particles" according to the present invention will be described.

The "pigments" to be used as the "pigment particles" according to the present invention are mainly "bright pigments", "phosphorescent pigments" and "coloring pigments". Among them, the "bright pigments" are not particularly limited if they provide coated films with attractiveness of appearance such as metallic and pearl appearance (light interference pattern) and the like by reflecting the incoming light, and are preferably, for example, one or multiple pigments selected from the groups consisting of metal powders such as aluminum powder and the like; and metal flakes such as stainless steel flakes and the like; pearl pigments such as mica, micaceous iron oxide (MIO, flake-like iron oxide), glass flakes, pearl mica and the like. In addition, coated products of the pigments exemplified above, such as resin-coated aluminum powders, silica-coated aluminum powders, fluorine compound-coated aluminum powders, titanium-coated mica, Hastelloy-coated glass flakes, and the like, are also included in the bright pigments of the invention.

The "phosphorescent pigments" are pigments having the property of absorbing visible, ultraviolet, and other light and emitting light without generating heat. The "phosphorescent pigments" are, for example, zinc sulfide, strontium aluminate, calcium aluminate, barium aluminate, magnesium aluminate, and the like, and may additionally contain europium, dysprosium, neodymium, and the like blended as an activator. In the present invention, the phosphorescent pigments may be used alone or in combination of two or more, and are not limited thereto.

The "coloring pigments" are pigments used primarily for the purpose of providing coated film with hue and attractiveness of appearance. The "coloring pigments" are often contained in the "base paint powders", but the separate addition and bonding of the coloring pigments onto the surface of the "base paint powders" via shellac is sometimes more effective in increasing attractiveness of the appearance of the resulting coated films than the blending of coloring pigments only to base paint powder. The "coloring pigments" includes pigments similar to those exemplified above; may be used alone of in combination of two or more; and are not limited to the examples above.

The "shellac" according to the present invention is a natural thermosetting resin purified from the secretion of scale insects (mainly, lac insects) living on leguminous plants (lebbek, guango, Acacia caatechu, pigeon pea, babul, and the like) or mulberry plants (bunyan, pipal, and the like). The shellac is soluble in lower alcohols (mainly, monovalent C₁-C₄ alcohols) at room temperature, and once heat-hardened, scarcely soluble in not only major organic solvents and aqueous solvents excluding warm alkaline water but also in lower alcohols, and thus it is extremely suitable as a paint ingredient.

The "shellacs" include commercially available white shellacs that are decolored and dewaxed shellacs, and any of these shellacs may be used in the present invention without limitation. The shellac, although the chemical structure thereof is not completely clear, mainly consists of polyesters having at least aleuritic acid and shellolic acid described below and the derivatives thereof as the constituents, and the hydroxyl groups present in the structures thereof are likely the reason for shellac exhibiting a favorable property in the powder paints of the present invention. In addition, the presence of butolic acid, palmitic acid, myristic acid, and the like is also confirmed in shellac. Accordingly, the "shellac" according to the present invention includes not only natural shellacs but also synthetic resins prepared based on the estimated chemical structure, having the same operation and effect as that described above.

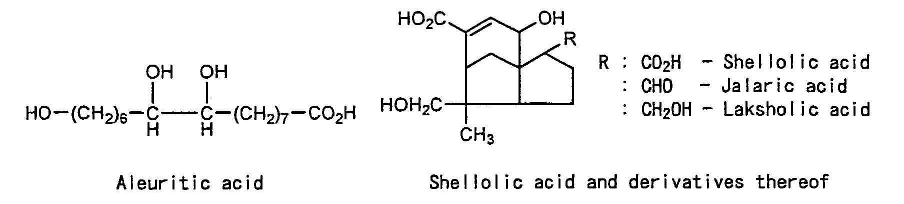

The content of the "shellac" with respect to the total amount of powder paint is preferably 0.01 to 1 mass %. The presence of shellac in the amount of less than 0.01 mass % can make it more difficult to bind the pigment particles and the base paint powders uniformly, while the presence thereof of more than 1 mass % can affect the evenness of the coated surfaces.

The average diameter of the "base paint powders" is preferably 10 to 100µm. Base paint powders with an average diameter of less than 10µm have a larger repose angle and can be thus poorer in flowablility, reducing coating efficiency, while those of over 100µm can lead to decrease in coating efficiency, for example, by detachment of the paints from the surface of substrates during coating. The "repose angle" is an angle of the slope of the mound that is formed when the powder paints are poured onto a circular plate, and may be determined by, for example, Powder Tester (brand name, Hosokawa Micron Corp.).

The average diameter of the "pigment particles" is preferably not more than 100µm. With the value of over 100µm, the pigment particles become more resistant to uniform binding to the base powder paints, leading to increase in the number of pigment particles detached and to decrease in the attractiveness of appearance of coated surfaces.

When bright pigments are used as the pigment particles, the bright pigments have preferably an average diameter of 2µm or more, and 100µm or less, more preferably 3µm or more, and 80µm or less. In addition, the favorable thickness thereof is 0.01µm or more, and 10µm or less, more preferably 0.1µm or more, and 6µm or less. More specifically, in the case of aluminum flakes, the flakes preferably have an average diameter of 2µm or more, and 50µm or less, and a thickness of 0.2µm or more, and 5µm or less; and in the case of pearl pigments, the pigments preferably have an average diameter of 5µm or more, and 70µm or less, and a thickness of 0.2µm or more, and 5µm or less.

Alternatively, when inorganic coloring pigments are used as the pigment particles, the pigments preferably have an average diameter of 0.01µm or more, and 5.0µm or less; while when organic coloring pigments are used, the pigments preferably have an average diameter of 0.01µm or more, and 1.0µm or less. In the case of phosphorescent pigments, the pigments preferably have an average diameter of 1µm or more, and 100µm or less, particularly preferably 5µm or more, and 50µm or less.

The content of the "pigment particles" is preferably 0.1 to 50 mass % with respect to the total amount of powder paints. With the pigment particles in an amount of less than 0.1 mass %, the amount of pigment particles in the paint can be not sufficient, sometimes resulting in coated films less attractive in appearance. Alternatively, with the pigment in an amount of over 50 mass %, the amount of the pigment particles is too excessive with respect to the base paint powders, leading to increase in the number of pigment particles that are not bound to the base paint powders and present independently and to decrease in attractiveness of appearance, as the coated films become similar to those obtained by the base powder paints prepared simply by dry blending. The amount is more preferably 0.5 mass % or more, and 40 mass % or less.

The powder paints of the present invention may also contain other additives according to the need and applications. Such additives include, for example, additives for increasing paint flowablility such as silica particles, aluminum oxide, and the like. In addition, powder paints containing other unavoidable impurities are also included in the scope of the present invention.

In producing the powder paints of the present invention, the process includes at least a "step of blending the base paint powder and the pigment particle", a "step of blending the resulting mixture with a liquid bonding auxiliary agent wherein shellac is dissolved in an organic solvent" and a "step of drying", and these steps should be operated in that order.

Accordingly, it is necessary first to blend the paint ingredients, especially the base paint powder and pigment particle, significantly well for producing the powder paint of the present invention. Insufficient blending thereof often causes maldistribution of the base paint powders or pigment particles, and increases the possibility of the same base paint powders or pigment particles binding to each other, thus making it difficult to produce coated films more attractive in appearance.

The blending method is not particularly limited if the paint ingredients can be sufficiently blended, and the blending is commonly conducted by using a mechanically agitating blender or an airstream fluidized blender.

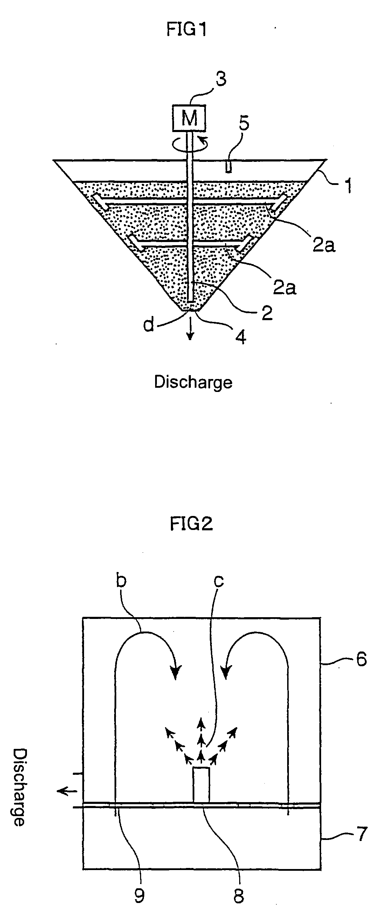

The "mechanically agitating blender" is, for example, a mechanically agitating blender driven by a hanging shaft. As shown in Figure 1, the mechanically agitating blender driven by a hanging shaft is equipped with an agitator shaft 2 and a motor 3 driving the same in a reverse conical housing 1, and has an exhaust opening 4 for discharging the paint powders after blending. The number, 2a, represents the blending blades connected to the agitator shaft.

The mixing condition in the "mechanically agitating blender" is a condition under which the base paint powders, pigment particles, and the like are uniformly blended and the pigment particles are not broken down. It is because the damage of the bright pigments leads to reduction in the attractiveness of appearance, particularly when bright pigments are used as the "pigment particles". The rotational velocity of the agitating blender satisfying the condition above is preferably a peripheral velocity of 3 to 6 m/s. The rotational velocity slower than that described above makes it difficult to conduct sufficiently uniform blending, and alternatively, the rotational velocity faster than that leads to breakdown of the pigment particles due to the shearing force of the agitating blades.

When blended at the peripheral velocity of 3 to 6 m/s in the hanging shaft driving-type mechanically agitating blender, the particles, especially high density bright pigments, tend to stay in the dead space located at the vicinity of the bottom of container 1 (indicated by "d" in Fig. 1) and may not be dispersed well. Therefore, it is preferable to stir the particles while supplying air into the space between the agitating shaft and the bottom of container 1 for more uniform blending.

Figure 2 shows a schematic illustration of an "airstream fluidized blender". In Figure 2, the ingredients such as base paint powders and the like present in chamber 6 are uniformly dispersed and blended in chamber 6 by the airstream supplied from airstream generation equipment 7 through airstream generator hole 9. This airstream fluidized blender does not damage the pigment particles and others, and thus is favorable as it allows production of coated films attractive in appearance.

In the process of producing powder paints according to the present invention, a base paint powder and a pigment particle are first blended uniformly, and subsequently a liquid bonding auxiliary agent wherein shellac is dissolved in an organic solvent is blended to the base paint and pigment powder mixture uniformly.

The "organic solvent" to be used is not particularly limited if it can dissolve shellac and hardly dissolve the resins contained in the powder paint, and are, for example, those having as the main components one or multiple mixed solvents of monovalent alcohols selected from methanol, ethanol, n-propanol, isopropanol, butanol, and the like. In addition, the organic solvent may contain, in addition to the monovalent alcohol above, polyvalent alcohols such as ethylene glycol and the like; esters such as methyl acetate, butyl acetate, and the like; ketones such as methylethylketone and the like; ethers such as dimethylether, methylethylether, and the like; aromatic hydrocarbons such as benzene, xylene, and the like; and aliphatic hydrocarbons such as hexane, heptane, and the like.

In the present invention, a solution of shellac in the organic solvent described above is added as the "liquid bonding auxiliary agent", and smaller droplets thereof during the addition lead to production of the paint more attractive in appearance. What is first discovered by the present inventors is that the droplets of the liquid bonding auxiliary agent having a diameter of 1 mm or less suppress the binding of the same base paint or pigment powders to each other even though the reason is not clear, and thus allow more uniform binding between the base paint and pigment particles. In addition, such droplets somehow provide the powder paint with resistance against the blocking of the ingredients during the storage thereof. The term, "blocking", means phenomena wherein the paint powders adhere to each other, forming rice-grain sized clumps or solidify the entire paint powders in the container to such an extent that it is difficult to bring the solidified paint powders back to the original paint powders with slight force. As these advantageous effects increase when the droplets become even smaller, the droplets preferably have a diameter of 100µm or less, more preferably 50µm or less. Smaller droplets also have an additional advantage in allowing easier and uniform blending of the liquid bonding auxiliary agent with the base paint powders and pigment particles.

By the operation and effect of the "liquid bonding auxiliary agent", the bond between the base paint powders and pigment particles is significantly strengthened, eliminating the problem of separation thereof during the coating operation and the like.

The "liquid bonding auxiliary agent" should adhere to both base paint powders and pigment particles uniformly. Uneven adhesion leads to deviation in the bonding strength between the base paint powders and the pigment particles, and affects the attractiveness of appearance of the coated films. In order to attain uniform adhesion, it is preferable to add the liquid bonding auxiliary agent by spraying or dropwise addition, more preferably by spraying. It is because the liquid bonding auxiliary agent can be uniformly adhered more easily by spraying.

When the ingredients are mixed by a mechanically agitating blender, the liquid bonding auxiliary agent may be added either by spraying or dropwise addition. For example in Figure 1, a liquid bonding auxiliary agent can be blended uniformly by adding the liquid bonding auxiliary agent by spraying or dropwise addition via injection port 5 while mixing the ingredients. Although only one injection port 5 for adding the liquid bonding auxiliary agent is set forth in Figure 1, multiple injection ports may be placed in order to add the liquid bonding auxiliary agent more uniformly.

Alternatively when an airstream fluidized blender is used, it is preferable to add liquid bonding auxiliary agent by spraying. That is, spraying the liquid bonding auxiliary agent c via bonding auxiliary agent-injection port 8 in Figure 2 to the ingredients homogeneously dispersed in chamber 6 allows uniform blending of the bonding auxiliary agent all over the constituents. Similarly, multiple bonding auxiliary agent-injection ports 8 may be placed as in the mechanically agitating blenders.

The amount of the "liquid bonding auxiliary agent" added is preferably 1 to 100 mass % with respect to the amount of the entire powder paint excluding shellac, i.e., the total amount of the "base paint powders", "pigment particles", and "others additives". The amount of less than 1 mass % sometimes leads to insufficient bonding between the base paint powders and the pigment particles, while the amount over 100 mass % may lead to elongation of the period required for addition and drying and thus decrease in productivity. As for the concentration of shellac in the liquid bonding auxiliary agent, a favorable concentration calculated from the amount of shellac to be included in the powder paint and the amount of the liquid bonding auxiliary agent to be added may be adopted.

The process of producing powder paints according to the present invention includes a drying step. The drying step is conducted for evaporating the organic solvent in the liquid bonding auxiliary agent and the like and for ensuring firm bonding between the base paint powders and the pigment particles.

The means for drying is not particularly limited, but is for example supplying air. And considering the operating efficiency, the air is preferably heated. The temperature of the air may be determined appropriately, but should be at least lower than the softening points of the powder paint resin ingredients. When the temperature is higher than the softening points, the resins soften and cause the blocking of the powder particles. The "softening point" of the present invention can be determined, for example, by placing a sample in a hot glycerin bath heated at a programmed temperature increase rate of 3°C/min, and determining the temperature at which the sample softens and falls by using a automatic ring and ball softening point tester (MEITECH company, Ltd).

The temperature of the drying air is generally 20 to 120°C, more preferably 40 to 100°C. Further, the period of supplying the air may also be decided arbitrarily; for example, the ingredients may be heated by supplying the heated air after addition of the liquid bonding auxiliary agent and then cooled; or the constituents may be heated by supplying the heated air while the liquid bonding auxiliary agent being added and then cooled.

When a mechanically agitating blender is employed for blending, the air is supplied into the space between the bottom of container 1 and the blending shaft in Figure 1, in a similar manner to the mode for blending the base paint powders and the pigment particles uniformly.

When an airstream fluidized blender is employed for blending, the airstream per se has a drying capability, and when heated air is supplied as the airstream, the drying efficiency will become even higher.

The powder paints produced in this way can be coated on substrates by electrostatic coating, fluidized-bed coating, spraying, in-mold or other coating methods, and baked in a hot-air oven, infrared oven, induction heating oven or the like to give hardened coated films. As the base paint powders and the pigment particles are firmly bound to each other in the powder paints according to the present invention, these ingredients do not separate even during coating by the electrostatic coating method, preventing adhesion thereof to the coating machine, especially to the tip portions of the coating machine, and allowing stable coating operation.

The process of producing coated products according to the present invention comprises a step of coating the abovementioned powder paint onto the substrate made of metal material by electrostatic powder coating. In the process of producing coated products, the base paint powders and the pigment particles do not easily separate. And especially when a metallic metal pigment is used as the pigment particle, the metallic metal pigment, for example, flake-like metal flakes or the like, blended in the powder paint are oriented uniformly in the coated films; and thus the process provides the coated films fewer in dullness, more attractive in appearance, and having smaller difference in metallic appearance when viewed from front and in the direction different therefrom and fewer black spots due to the absence of metallic metal pigments. Similarly when a flake-like pearl mica is used as the pigment particle, the process of the invention provides coated films having smaller difference in peral-like appearance when viewed from front and in the direction different therefrom and a smaller number of decolored spots (transparent, revealing the substrate) due to the absence of the pearl pigments, without deterioration in the pearl-like appearance of the entire coated film.

In the process of the present invention, metal materials are used as the substrates. It is for the purpose of revealing the difference between the inventive and conventional processes more distinctly. It is because while the use of conventional powder paints in the electrostatic powder coating, which is suitable for coating of metallic substrates, may reduce attractiveness of appearance of the coated films, the use of the powder paints of the present invention eliminates such a concern. The kind of the metal materials is not particularly limited, and examples thereof include most widely used ferrous metal materials such as steel, alloy steel, and the like; nonferrous metal materials such as aluminum, stainless, zinc, tin, copper, titanium, magnesium, brass, and the like, and alloys thereof; plated metal materials such as galvanized steel plates, tinned steel plates, and the like; surface-treated metal materials such as those chemically treated with chromic acid or phosphate salt-based, titanium-based, zirconium-based, organic metal salt-based, and other non-chromium-based reagents; and aluminum metal materials and alloys that are previously subjected to anodic oxidation, sealing, and the like.

The substrates made of the metal materials above may be those that provide directly final products after the coating step, but include any kinds of substrates that require coating, for example, those providing components of final products or semi-processed products. The phrase, the substrates "made of metal material", means a substrate wherein the surface thereof to be coated is mainly made of metal material, and accordingly the substrates include those having non-metal materials, such as resins and the like, on some part of the surface or in other internal portions.

The thickness of coated films formed by the process of the present invention is usually 30 to 250µm, preferably 60 to 150µm, after baking. The coated films having a thickness of less than 30µm tend to become lower in evenness and also have nonconformity in appearance, due to distinguishable seediness of the surface. Alternatively, the coated films having a film thickness of over 250µm, tend to have problems of generation of solvent poppings, rough surface due to electrostatic repulsion, and the like.

The powder paints are baked under a condition of the surface temperature of metal materials at 130 to 350°C, preferably 140 to 250°C, for 30 seconds to 60 minutes, preferably 1 to 50 minutes.

When the metal materials have casting surface, or when the appearance of the finished products can be damaged by the irregularity of the substrate surface, it is useful to have, after degreasing and chemically treating the metal substrates, the combination of a step of forming a primer layer made of the powder paints and a step of coating the appearance-improving powder paints over the primer layer, for the purpose of ensuring the attractiveness of appearance by suppressing the irregularity of the raw materials, and providing further improved adhesiveness and corrosion resistance.

The primer layer may also be formed for other purposes than those described above, for example, for production of the metal components to be used under harsh conditions. When a colored coated film is formed as the primer layer, it is possible to provide the coated films with stereoscopic effect, depth, unique pattern, and the like, as well as the attractiveness of appearance such as metallic and pearl appearance, and thus to further increase the attractiveness of appearance of coated film, by properly selecting a hue of the primer layer different from that of the coated film formed with the paint powder according to the present invention. The primer layer may be formed of course with the paint powders according to the present invention.

As the primer compositions for forming the primer layers, any resin compositions commonly used in the paint industry may used without particular limitation, and the composition may be selected properly according to the kind of metal substrates, and the shape, application, requirements, or the like of the substrates. Typical examples of the resins constituting the primer composition include epoxy resin primers, acrylic resin primers, polyester resin primers, epoxy polyester resin primers, and the like. These primer compositions may be in any of the following types: heat hardening-type, normal temperature hardening type, or lacquer type. The primer compositions may also be in any of the states: organic solution (including high solid content systems having a solid content of 40 mass % or more), aqueous solution, and powder.

In forming the primer layer with powder paints, various thermosetting resins may be used as the base paint powders of the primer powder paints, but it is preferable to use resins similar to the base resins of the paint powders of this invention for the coated films, which are to be formed over the primer layer. The use of similar resins ensures high adhesiveness between the two layers and prevention of the defects in appearance such as cissing, cratering, and the like due to the dusts of different paints. For example, a polyester resin is preferable when a polyester resin is used as the film-forming resin in the base paint powder, while an acrylic resin, when an acrylic resin is used as the film-forming resin in the base paint powder. Further, it is preferable to use a resin that can make the final products more anti-corrosive by coating the metal substrates.

More specifically, when the film-forming resin of the base paint powder is a β-hydroxyalkylamide hardening-type polyester resin, a paint powder having an epoxy hardening-type polyester resin as the base paint powder is preferably used for the primer layer. The epoxy hardening-type polyester resin paint powders include, for example, Everclad No. 2100 produced by Kansai Paint Co. , Ltd, which is favorable from the viewpoint of performance of coated films and cost effectiveness.

Alternatively, when the base paint powder is constituted with a β-hydroxyalkylamide hardening-type acrylic resin, a paint powder having a dodecanedicarboxylic acid hardening-type epoxy group-containing acrylic resin as the base paint is preferably used as the primer layer. The dodecanedicarboxylic acid hardening-type epoxy group-containing acrylic resin paint powders include, for example, Everclad No. 5600DK produced by Kansai Paint Co.,Ltd, which is favorable from the viewpoint of performance of coated films and attractiveness of appearance.

The powder paints for forming the primer layers may contain coloring pigments, extender pigments, anti-corrosive pigments, and the like, and may be those without pigments for producing transparent coated films. If the heat flowablility of the primer layer paints is greater than that of the powder paints according to the present invention for forming coated films over the primer layer, the finished appearance of the coated products will be further improved.

In the step of forming primer layers, the powder primers may be baked to complete hardening after coating; or slightly pre-heated to such an extent that the powder particles are thermally fused mildly; or only coated without any heat treatment and baked simultaneously with the coated films after application of the powder paint of the present invention.

If the primer layer is baked to complete hardening, the thickness of the primer layer is preferably 30 to 250µm, preferably 60 to 150µm, and the layer is baked at a constant temperature of 130 to 350°C, preferably 140 to 250°C for 30 seconds to 60 minutes (preferably, 1 to 50 minutes). Alternatively, if the primer layer is partially heat-fused as described above or simply coated without any heating and then the powder paint of the present invention is coated, it is possible to reduce the thickness of the resulting coated layers respectively by 40 to 60% from those in the case where the layers are formed and baked independently. When two different layers of paints are piled and baked simultaneously, the appearance-improving powder paints, even with a film thickness 40 to 60% thinner than the thickness required for the films which are produced by coating the paint powders alone, provide coated films excellent in evenness and attractiveness of appearance, as the paint powders exhibit favorable heat-flowablility together with the primer layer.

In the process of producing coated films of the present invention, it is possible to add a step of forming a top clear layer over the coated films prepared by the powder paints of the present invention, which leads to further increase in the performance of coated films, for example, in weatherability, attractiveness in finished appearance such as high brilliance, scuff resistance, and chemical resistance, etc. The step of forming the top clear layer may be conducted regardless of the presence or absence of the primer layer formed.

The top clear layer is preferably formed with an acrylic clear paint. Such acrylic clear paints include, for example, acrylic solvent-based clear paints (e.g., ALC-100 Clear of Kansai Paint Co., Ltd) which are commonly used as top-coats of auto body and parts; acrylic solvent-based high solid-content clear paints (preferably, having a solid content of 40 mass % or more); two-component polyisocyanate hardening-type acrylic clear paints (e.g., Super Diamond Clear Q of Kansai Paint); and acrylic powder paints (e.g., Everclad No. 5600DK of Kansai Paint Co.,Ltd). Incidentally, Everclad No. 5600DK, an acrylic powder paint of Kansai Paint Co. , Ltd, exhibits an excellent performance also as a primer layer paint, a good adhesiveness to various metal materials, and an excellent corrosion resistance.

The film-forming resins to be used for the acrylic solvent-based clear paints, which are used for forming the top clear layers, are generally melamine hardening-type hydroxyl group-containing acrylic resins, and usually coated by spray coating.

The top clear layers are baked by keeping the layers at a temperature of 120 to 160°C for 10 to 40 minutes. The thickness thereof after drying is preferably 20 to 50µm.

When a solvent-type clear paint of the two-component polyisocyanate hardening-type hydroxyl group-containing acrylic resin is used for the top clear layer, the paint can be baked at a lower temperature of as low as 60 to 80°C. In such a case, the paint is coated by spray coating to such a degree that the film thickness after drying becomes 20 to 50µm.

When a dodecanedicarboxylic acid hardening-type epoxy group-containing acrylic resin powder paint (e.g., Everclad No. 5600DK of Kansai Paint Co.,Ltd) is used for forming the top clear layer, it is preferable that the primer layer is also formed with a powder paint; that is, all coated film layers are formed with powder paints. In such a way, coated films can be formed without any adverse effect of volatile organic substances including harmful organic solvents on humans and the environment, as the emission thereof can be almost eliminated. In addition, as it is possible to recover and reuse all paints including the powder paints of the present invention, the use of only powder paints is advantageous in its high reuse efficiency and cost effective.

The kinds of coated products obtainable by the process described above are not particularly limited, and examples thereof include automobile materials (body, auto parts (including aluminum wheel, iron wheel, stainless wheel, magnesium alloy wheel, and the like)), building materials, containers (such as gas containers), trains, ships, vehicles, consumer electronics, office machines, and the like.

### BRIEF DESCRIPTION OF THE DRAWINGS

Figure 1 is a schematic illustration of a hanging shaft driving-type mechanically agitating blender.
Figure 2 is a schematic illustration of an airstream fluidized blender.
Figure 3 shows a macrophotograph of paint particles in the powder paint prepared by the production process according to the present invention.
Figure 4 shows a macrophotograph of paint particles in the powder paint prepared by dry blending method (conventional method).
Figure 5 shows a macrophotograph of a coated film prepared with a powder paint by the production process of the present invention.
Figure 6 shows a macrophotograph of a coated film prepared with a powder paint by dry blending method (conventional method).

### EXAMPLES

Hereinafter, the present invention will be described in more detail with reference to Examples and Test Examples, but it should be understood that the scope of the present invention is not limited thereto.

### Production Example 1

### Production of base paint powders

The compounds set forth in Table 1 were blended in the composition set forth in Table 1 (respectively, expressed in relative amounts), and melt-kneaded at the melt-kneading temperature set forth in Table 1 into pellet-type compositions A, B, C, D, and E for powder paints.

**Table 1**

| Powder Paint Composition | A | B | C | D | E |
|---|---|---|---|---|---|
| Thermosetting polyester resin 1 | 80 | - | - | - | 80 |
| Thermosetting polyester resin 2 | - | 95 | - | - | - |
| Thermosetting polyester resin 3 | - | - | 50 | - | - |
| Thermosetting acrylic resin | - | - | - | 80 | - |
| Polyisocyanate compound | 16 | - | - | - | 16 |
| Hydroxyalkylamide | - | 5 | - | - | - |
| Epoxy resin | - | - | 46 | - | - |
| Dodecanedicarboxylic acid | - | - | - | 18 | - |
| Titanium dioxide | - | - | - | - | 45 |
| Melt-kneading temperature (°C) | 130 | 130 | 110 | 90 | 130 |

In Table 1, thermosetting polyester resin 1 used was "Finedic M-8050 (brand name)" (hydroxyl value: 49 mg KOH/g) produced by Dainippon Ink and Chemicals, Inc. The polyisocyanate compound was "B-1530 (brand name)" (a polyisocyanate block copolymer from isophrone diisocyanate (IPDI) and ε-caprolactam) of Huls.

Thermosetting polyester resin 2 was "Finedic M-8961 (brand name) " (acid value: 33 mg KOH/g) of Dainippon Ink and Chemicals, Inc. The hydroxyalkylamide was "XL-552 (brand name)" (β-hydroxyethyl adipamide, hydroxyl equivalence: 84) of EMS.

Thermosetting polyester resin 3 was "U-PiCA Coat GV-230 (brand name) " (acid value: 53 mg KOH/g) of Japan U-PiCA, Ltd. The epoxy resin was an epoxy resin of Asahi Kasei Corp., "AER-6014 (brand name)" (epoxy equivalence: 980).

The thermosetting acrylic resin was "Almatex PD3413 (brand name) " (epoxy equivalence 470) of Mitsui Chemicals, Inc. Titanium dioxide was "Titanix JR-605 (brand name)" of Tayca Corp.

Pelletized compositions A, B, C, and E for powder paints were pulverized and screened through a 84 µm sieve respectively to give base paint powders A, B, C, and E having an average diameter of 43 µm.

Alternatively, pelletized powder paint composition D was pulverized and screened through a 74 µm sieve to give base paint powder D having an average diameter of 35µm.

### Production Example 2

### Production of liquid bonding auxiliary agents

The compounds set forth in Table 2 were blended in the composition set forth in Table 2 (respectively, expressed in relative amounts) and stirred in a disperser to give liquid bonding auxiliary agents a, b, c, d, e, and f.

**Table 2**

| Liquid Bonding Aid | I a | b | c | d | e | f |
|---|---|---|---|---|---|---|
| Shellac | 2 | 2 | 2 | 2 | 0.09 | 20 |
| Methanol | 98 | - | 49 | 95 | 99.91 | 80 |
| Isopropanol | - | 98 | 49 | - | - | - |
| Butyl acetate | - | - | - | 3 | - | - |

In Table 2, the shellac used was "Bleached Dewaxed Shellac (brand name)" produced by Japan Shellac Industries, Ltd..

### Example 1

To each base paint powder, A to E, prepared in Production Example 1, an aluminum pigment ("PCF-7670A" (brand name) of Toyo Aluminum K.K.) having an average diameter of about 18 µm; a pearl pigment ("Iriodin 103 WNT" (brand name) of Merck Ltd., Japan) having an average diameter of about 60µm; a stainless steel flake ("Stainless Paste 01-1204" (brand name) of Toyo Aluminum K.K.) having an average diameter of about 60µm; a phosphorescent pigment ("G-300F" (brand name) of Nemoto & Co., Ltd.) having an average diameter of about 10µm; or a carbon black ("carbon black MA-100" (brand name) of Mitsubishi Chemical Corp.) having an average diameter of about 24 nm; was added as a pigment particle. The resulting mixtures were stirred and blended; added respectively with a liquid bonding auxiliary agent, a, b, c, d, e, or f, prepared in Production Example 2 by spraying; and dried by supplying heated air at 80°C in an airstream fluidized blender, Agglomaster (brand name) of Hosokawa Micron Corp., giving powder paints Nos. 1 to 14 set forth in Table 3.

Separately as comparative examples, powder paints having the composition of Nos. 15 and 16 in Table 3 were prepared by the dry blending method. These powder paints were prepared by using the Agglomaster (brand name) of Hosokawa Micron Corp. as a mixer/drier in the similar manner to above, except that the liquid bonding auxiliary agent was not added, and that they were prepared simply by blending a base paint powder and an aluminum pigment under supplied air at normal temperature.

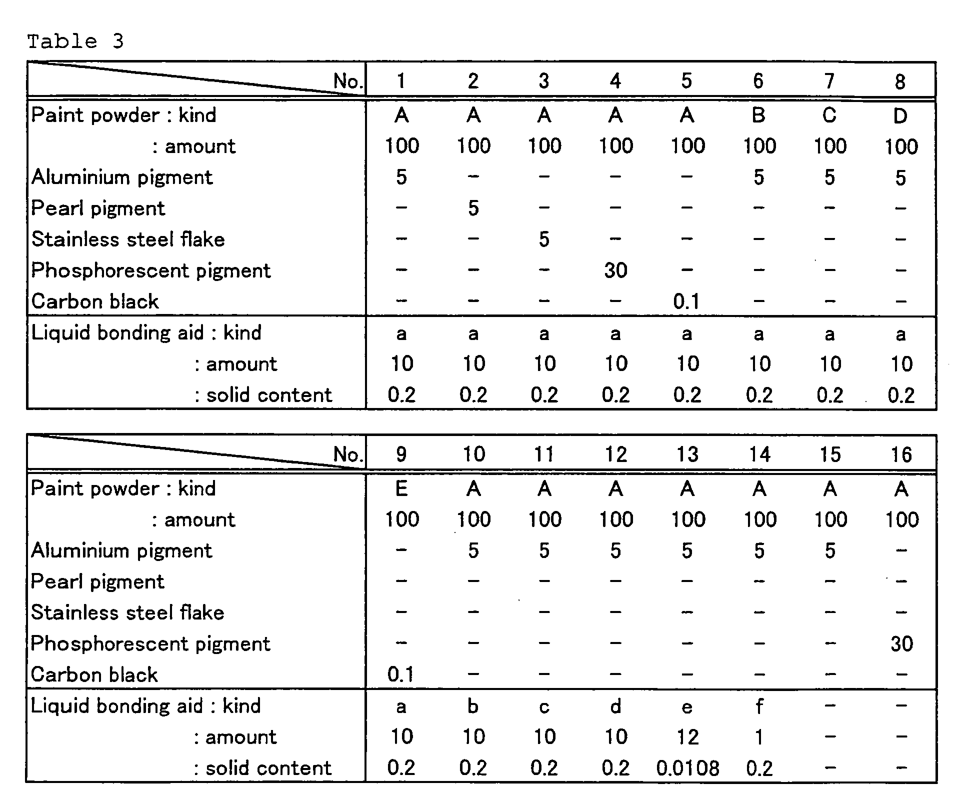

### Example 1

SPCC steel plates having a dimension of 0.8×70×150mm galvanized with zinc phosphate ("PB-3118M" (brand name), Nihon Parkerizing Co., Ltd.) were coated using an electrostatic powder coating machine (GX108 (brand name), Nihon Parkerizing Co., Ltd.) under the following condition:
Voltage applied : -70 kV
Main air pressure: 0.6 kgf/cm²
Pattern air pressure: 1.0 kgf/cm²
Distance between gun and plate: 200 mm
Film thickness: 60 to 80µm

### Evaluation Example 1

### Coating efficiency

The flow of powder paints during continuous coating was observed visually. Continuous coating without generation of spits was designated as "○"; with few generation of spits, "Δ"; and with frequent generation, "×".

### Evaluation Example 2

### Properties of coated films

### (I) Evenness

The evenness of coated films was determined by visual examination, and classified into three categories: "ⓞ" when the film has extremely high evenness; "○" when the film may be regarded as even: and "×" when the film lacks evenness.

### (II) Dispersion of pigments

The degree of dispersion of the pigments used in coated films was determined by visual examination, and classified into three categories: "○" when the pigments are uniformly dispersed; "Δ" when the pigments are slightly maldistributed; and "×" when the pigments are unevenly distributed.

### Evaluation Example 3

### Performances of coated films

### (III) Adhesiveness

100 pieces of square coated films having a dimension of 1mmX 1mm were prepared by crosscutting coated films to the depth of substrate plate using a cutter knife. An adhesive tape was applied onto the surface of the square coated films, and torn off violently at 23°C. The number of the square coated films remaining intact was determined by visual inspection, and the adhesiveness was designated as "○" when the number above is 100.

### (IV) Water resistance

Coated films were immersed in hot water at 40°C for 240 hours, and were examined visually immediately after the coated films were picked up. The water resistance was designated as "○" when the coated films do not have any blisters, dulling, or other abnormalities. After drying at a temperature of 23°C and a relative humidity of 50% for 2 hours, the adhesiveness of the films was determined in a similar manner to the adhesiveness test described above.

### Evaluation Example 4

### Possibility of recovery and reuse

The powder paints that were not adhered to the substrate plates in the tests for the coating efficiency (Evaluation Example 1), properties of coated films (Evaluation Example 2) and performances of coated films (Evaluation Example 3) above were recovered and reused for coating once again. And the dispersion of pigments in the coated films obtained was analyzed by visual examination. The possibility of recovery and reuse was designated as "○" when the dispersion of the coated films is equivalent to that of the original coated films, and as "×" when pigments are unevenly distributed.

### Evaluation Example 5

### Brightness

The brightness (metallic appearance) and unevenness in brightness (maldistribution of bright pigments) of coated films were evaluated by visual examination, and was designated as "○" when the brightness is good and there is no unevenness in brightness; "Δ" when there is some unevenness and the brightness is lower; and "×" when there is unevenness in brightness all over the surface of the coated films and the brightness is almost none.

### Evaluation Example 6

### Alkali resistance

0.5 ml of 0.1 N aqueous sodium hydroxide solution was poured dropwise onto coated films, and the films were left to stand at 50°C for 3 hours, washed with running water, and dried at a relative humidity of 50% for 2 hours. Then, the surfaces of the films previously covered with the droplets were examined by visual examination. The alkali resistance was designated as "ⓞ" when there is no abnormality at all; "○" when there are some traces of the droplets observable but causing no practical problems, "Δ" when the surface is slightly blackened; and "×" when the surface is distinctly blackened.

### Result 1

### About powder paint particles

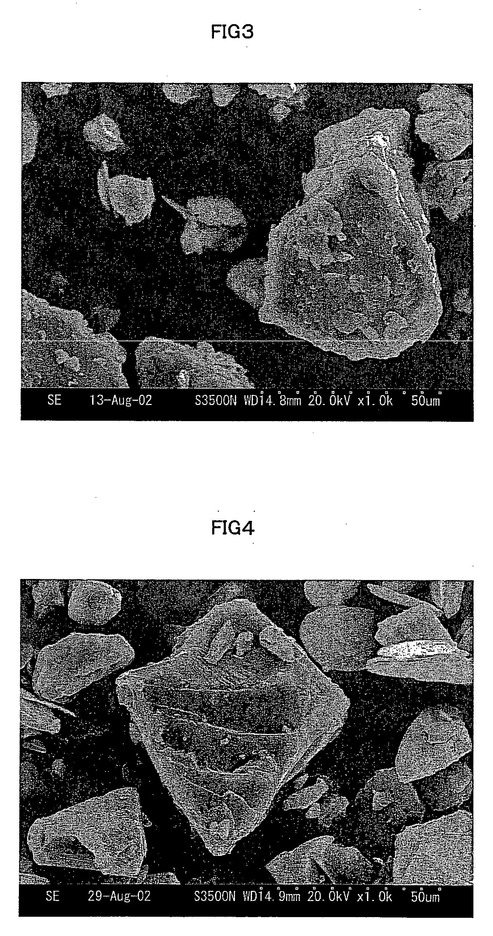

Figure 3 shows a macrophotograph of a powder paint particle (No. 1) according to the present invention, while Figure 4 shows a macrophotograph of another powder paint particle (No. 15) prepared by the dry blending method.

In Figure 3, it is observable that bright pigments are bound on the surface of base paint powders.

While Figure 4 indicates that the bright pigments are placed on but not bound to the surface of the base paint powders and there are some pigment particles fallen from the base paint powders and present independently. Such paint powders will not provide coated films attractive in appearance due to maldistribution of paint ingredients during coating, or will not allow recovery and reuse of the powder paints as the pigment particles easily separate from the base paint powders.

In contrast, the powder paints according to the present invention do not cause such problems, as the pigment particles are firmly bound to the base paint powders via shellac. This result will be further verified by the results in the Evaluation Example described below.

### Result 2

### Attractiveness of appearance of coated surfaces

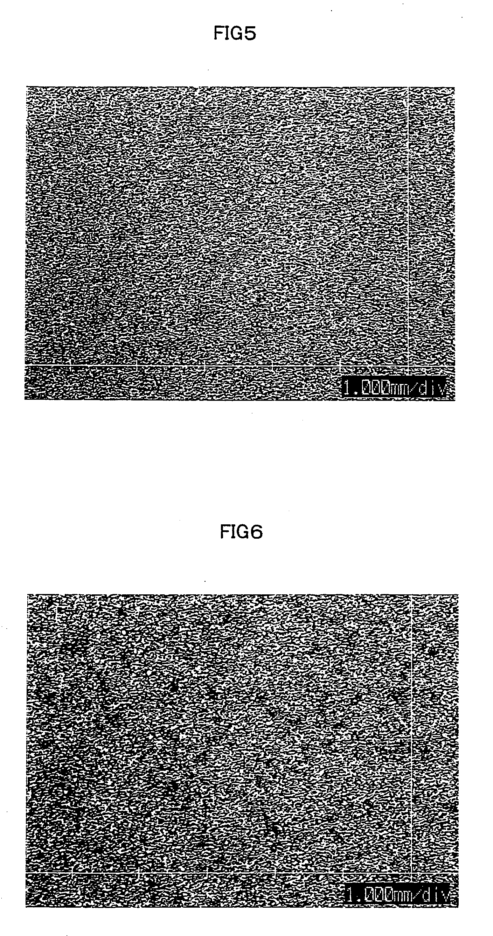

Figure 5 shows a macrophotograph of a coated film prepared from powder paint particle No.1 according to the present invention, and Figure 6 a macrophotograph of a coated film prepared from powder paint particle No. 15 prepared by the conventional dry blending method.

In Figure 6, there are several black spots observable here and there due to the absence of bright pigments (aluminum pigments), which lead to a somber impression of the entire coated film.

In contrast, in Figure 5, the bright pigments (aluminum pigments) are present all over the coated film; the black spots are smaller in diameter; and all paint ingredients are finely dispersed respectively, allowing uniform reflection of light from all over the surface and thus providing the coated surfaces with a brilliantly shining beautiful appearance.

### Result 3

### Evaluation results

The coating efficiency, properties of coated films, performances of coated films, and possibility of recovery and reuse of the powder paints prepared in the Examples above were evaluated according to the evaluation methods (Evaluation Example 1 to 4) above. The results are summarized in Table 4.

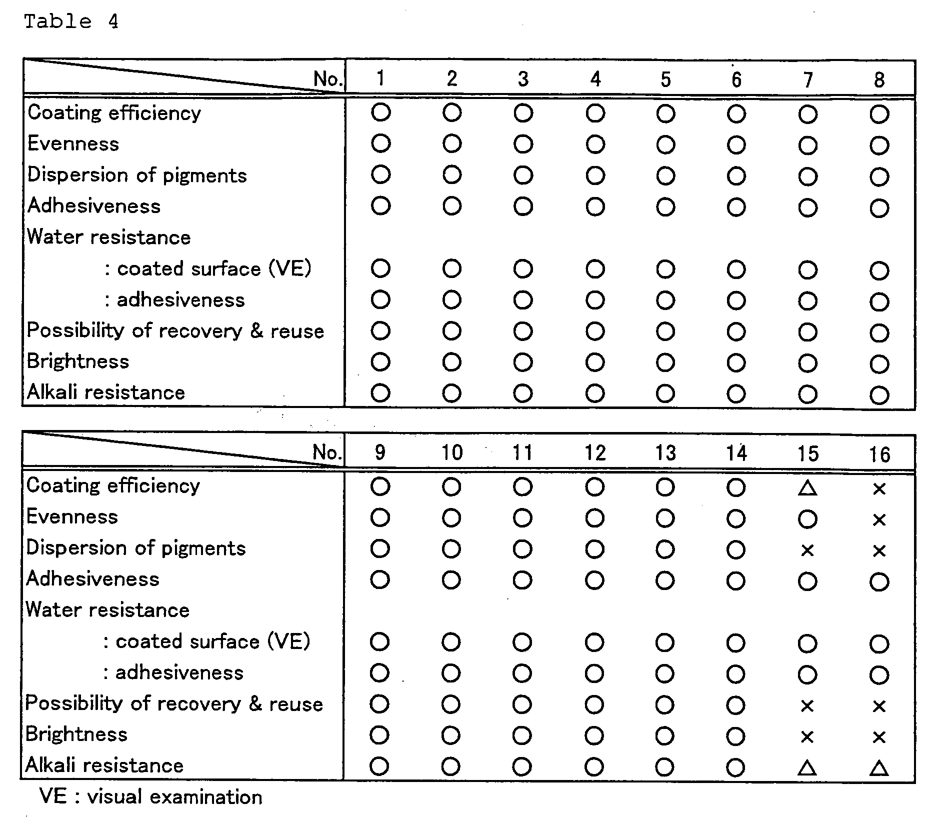

As shown in Table 4, though the adhesiveness and water resistance of the coated films from the powder paints (Nos. 15 and 16) prepared by the dry blending method were significantly high, the coating efficiency, evenness of the coated films, dispersion of pigments, and accordingly the attractiveness of the coated films were lower because the pigment particles are not properly bound to the base paint powders. In addition, pigments in the coated films prepared from the powder paints recovered and reused were more unevenly distributed, as the pigment particles separate easily from the base paint powders.

In contrast, the powder paints according to the present invention provided higher coating efficiency and coated surfaces favorable in any of the evaluation tests and excellent in attractiveness of appearance, because the pigment particles are tightly bound to the base paint powders. In addition, the surfaces of the coated films obtained by using the powder paints recovered and reused were equivalent or not inferior to those of the first coated surfaces.

### Example 2

An epoxy hardening-type polyester resin powder primer (Everclad No. 2100 (brand name), Kansai Paint Co.,Ltd.) was coated to a film thickness of 80 to 100µm onto an AC4C plate, which was previously chemically converted with chromate (AL-1000 (brand name), Nihon Parkerizing Co.,Ltd.), by using an electrostatic powder coating machine GX-108. And the resulting layer was heated and hardened at 160°C for 30 minutes to form a primer layer. Subsequently, powder paint No. 2 according to the present invention was coated over the primer layer to a film thickness of 80 to 100µm by using the electrostatic powder coating machine, GX-108, and the coated film was heated and hardened at 160°C for 30 minutes. The condition for electrostatic coating of the powder paint was the same as that in Example 1 above.

### Example 3

A dodecanedicarboxylic acid hardening-type epoxy group-containing acrylic resin powder clear paint (Everclad No. 5600DK (brand name), Kansai Paint Co., Ltd.) was coated as a powder primer to a film thickness of 80 to 100µm onto an AC4C plate, which was previously chemically converted with chromate (AL-1000 (brand name), Nihon Parkerizing Co.,Ltd.), by using an electrostatic powder coating machine GX-108. And the resulting layer was heated and hardened at 160°C for 30 minutes to form a primer layer. Subsequently, powder paint No. 8 according to the present invention was coated over the primer layer to a film thickness of 80 to 100µm by using the electrostatic powder coating machine, GX-108, and the coated film was heated and hardened at 160°C for 30 minutes. The condition for electrostatic coating of the powder paint was the same as that in Example 1 above.

### Example 4

An epoxy hardening-type polyester resin powder primer (Everclad No. 2100 (brand name), Kansai Paint Co.,Ltd.) was coated to a film thickness of 40 to 50µm onto an AC4C plate, which was previously chemically converted with chromate (AL-1000 (brand name), Nihon Parkerizing Co.,Ltd.), by using the electrostatic powder coating machine GX-108. Subsequently, without heat-hardening the primer layer, powder paint No. 2 according to the present invention was coated over the layer to a film thickness of 40 to 50µm by using the electrostatic powder coating machine GX-108. And the primer and coated layer were heated and hardened at the same time at 160°C for 30 minutes. The condition for electrostatic coating of the powder paint was the same as that in Example 1 above.

### Example 5.

Powder paint No. 2 according to the present invention was coated to a film thickness of 80 to 100µm onto an AC4C plate, which was previously chemically converted with chromate (AL-1000 (brand name), Nihon Parkerizing Co.,Ltd.), by using the electrostatic powder coating machine GX-108, and the resulting layer was heated and hardened at 160°C for 30 minutes. Subsequently, an acrylic solvent-based clear paint (ALC-100 (brand name), Kansai Paint Co.,Ltd.) was coated to a film thickness of 30 to 40µm by spray coating, and the resulting film was heated and hardened at 140°C for 30 minutes to form a topcoat layer. The condition for electrostatic coating of the powder paint was the same as that in Example 1 above.

### Example 6.

A coated film was formed from the appearance-improving powder paint in the similar manner to Example 5 above. Subsequently a polyisocyanate compound hardening-type acrylic solvent-based clear paint (Super Diamond Clear Q (brand name), Kansai Paint Co.,Ltd.) was coated to a film thickness of 30 to 40µm by spray coating, and the resulting film was heated and hardened at 80°C for 30 minutes to form a topcoat layer.

### Example 7.

A coated film was formed from the appearance-improving powder paint in the similar manner to Example 5 above. Subsequently a dodecanedicarboxylic acid hardening-type epoxy group-containing acrylic resin powder clear paint (Everclad 5600DK (brand name), Kansai Paint Co.,Ltd.) was coated to a film thickness of 80 to 100µm by using the electrostatic powder coating machine GX-108. And the resulting film was heated and hardened at 160°C for 30 minutes to form a topcoat layer. The condition for electrostatic coating of the powder paint was the same as that in Example 1 above.

### Example 8.

In the similar manner to Example 2 above, a coated film was formed over the primer layer from the powder paints according to the present invention. And further an acrylic solvent-based clear paint (ALC-100 (brand name), Kansai Paint Co.,Ltd.) was coated to a film thickness of 30 to 40µm by spray coating, and the resulting film was heated and hardened at 140°C for 30 minutes to form a top-coat layer.

### Example 9.

In the similar manner to Example 3 above, a coated film was formed over the primer layer from the powder paints according to the present invention. And further a polyisocyanate compound hardening-type acrylic solvent-based clear paint (Super Diamond Clear Q (brand name), Kansai Paint Co.,Ltd.) was coated to a film thickness of 30 to 40µm by spray coating, and the resulting film was heated and hardened at 80°C for 30 minutes to form a top-coat layer.

### Example 10.

In the similar manner to Example 2 above, a coated film was formed over the primer layer from the powder paints according to the present invention. And further a dodecanedicarboxylic acid hardening-type epoxy group-containing acrylic resin powder clear paint (Everclad 5600DK (brand name), Kansai Paint Co.,Ltd.) was coated over the layer to a film thickness of 80 to 100µm by using the electrostatic powder coating machine GX-108, and the resulting film was heated and hardened at 160°C for 30 minutes to form a top-coat layer. The condition for electrostatic coating of the powder paint was the same as that in Example 1 above.

### Result 4

The evenness, adhesiveness, water resistance, brightness, and alkali resistance of the coated films prepared in Examples 2 to 10 above were examined in a similar manner to the Evaluation Examples above. The results are summarized in Table 5.

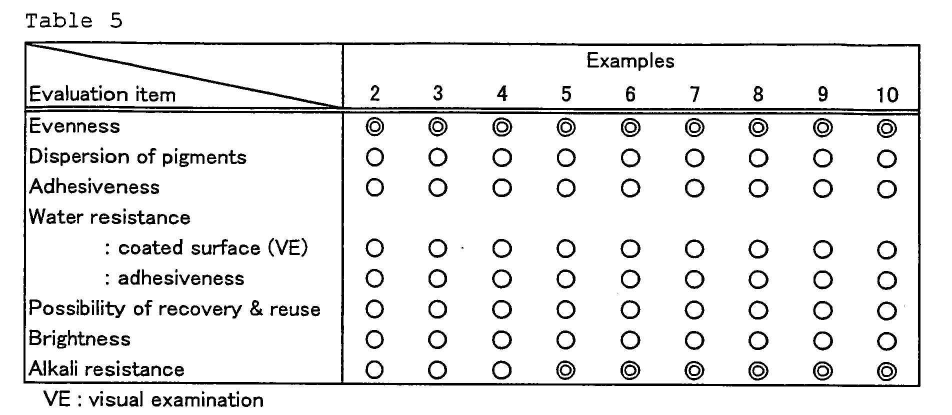

As apparent from the results above, it was confirmed that the formation of primer or top clear layers in addition to the coated films from the paint powders according to the present invention provides coated surfaces still more improved in the properties of coated films (especially, evenness and alkali resistance).

### INDUSTRIAL APPLICABILITY

The powder paints obtained according to the present invention are excellent in coating efficiency, as the constituents, base paint powders and pigment particles, are bound tightly and do not separate during coating operation or the like. And the powder paints that have not been adhered to the substrate can be reused, as the content of these ingredients is essentially identical to that of the original powder paints.

In addition, the coated films from the bright powder paints produced according to the present invention have fine textured surface very attractive in appearance and excellent in water resistance.

Therefore, the powder paints of the present invention can be used in wide applications, including industrial paint applications, giving coated films for decoration or protection, and are very useful from the practical viewpoint of economy and resource saving.

The process of producing powder paints according to the present invention has significantly high industrial utility, as it allows production of the powder paints above.

Further, the processes of forming coated films and of producing coated products according to the present invention are practically very useful and can be applied to a wide variety of industry use, as they allow formation of excellent coated films for decoration or protection, especially when combined with primer and top clear layers, and allow production of coated products.

## Claims

1. A powder paint, **characterized in that** pigment particles therein are bound via shellac to base paint powders therein.

2. The powder paint according to Claim 1, wherein the content of the shellac is 0.01 to 1 mass % with respect to the total amount of the powder paint.

3. The powder paint according to Claim 1 or 2, wherein the average diameter of the base paint powders is 10 to 100µm.

4. The powder paint according to any one of Claims 1 to 3, wherein the average diameter of the pigment particles is not more than 100µm.

5. The powder paint according to any one of Claims 1 to 4, wherein the powder paint contains a bright pigment as the pigment particle and the average diameter of the bright pigment is 2 to 100µm.

6. The powder paint according to Claim 5, wherein the bright pigments are in the shape of flake and the thickness thereof is 0.01 to 10µm.

7. The powder paint according to any one of Claims 1 to 6, wherein the powder paint contains an inorganic coloring pigment as the pigment particle and the average diameter of the inorganic coloring pigments is 0.01 to 5.0µm.

8. The powder paint according to any one of Claims 1 to 7, wherein the powder paint contains an organic coloring pigment as the pigment particle and the average diameter of the organic coloring pigments is 0.01 to 1.0µm.

9. The powder paint according to any one of Claims 1 to 8, wherein the powder paint contains a phosphorescent pigment as the pigment particle and the average diameter of the phosphorescent pigment is 1 to 100µm.

10. The powder paint according to any one of Claims 1 to 9, wherein the content of the pigment particle is 0.1 to 50 mass % with respect to the total amount of the powder paint.

11. A process of producing the powder paint according to any one of Claims 1 to 10, **characterized in that** the process comprises the steps of: blending the base paint powder and the pigment particle; blending the resulting mixture with a liquid bonding auxiliary agent wherein shellac is dissolved in an organic solvent; and drying.

12. The process of producing the powder paint according to Claim 11, wherein the liquid bonding auxiliary agent is blended using a mechanically agitating blender in the blending step.

13. The process of producing the powder paint according to Claim 11, wherein the liquid bonding auxiliary agent is blended using an airstream fluidized blender in the blending step.

14. The process of producing the powder paint according to any one of Claims 11 to 13, wherein the liquid bonding auxiliary agent is added by spraying or dropwise addition.

15. The process of producing the powder paint according to Claim 14, the step of spraying the liquid bonding auxiliary agent is carried out concurrently with the step of drying by supplying air.

16. The process of producing the powder paint according to Claim 15, wherein heated air is used as the air.

17. A process of forming a coated film, **characterized in that** the coated film is formed by electrostatic powder coating of the powder paint according to any one of Claims 1 to 10 onto a substrate made of metal material.

18. The process of forming a coated film according to Claim 17, wherein a primer layer is formed in advance to the electrostatic powder coating.

19. The process of forming a coated film according to Claim 18, wherein the primer layer is formed with a powder paint.

20. The process of forming a coated film according to Claim 19, wherein the primer layer is formed with a powder paint having an epoxy resin hardening-type polyester resin or acid hardening-type epoxy group-containing acrylic resin as the main component of the base paint powder.

21. The process of forming a coated film according to any one of Claims 17 to 20, wherein an additional top clear layer is formed over the coated film.

22. The process of forming a coated film according to Claim 21, wherein the top clear layer is formed with an acrylic solvent-based clear paint or acrylic powder-based clear paint.

23. The process of forming a coated film according to Claim 22, wherein a polyisocyanate hardening-type clear paint is used as the acrylic solvent-based clear paint.

24. The process of forming a coated film according to Claim 22, wherein an acid hardening-type clear paint having epoxy groups is used as the acrylic powder-based clear paint.

25. The process of forming a coated film according to Claim 22, wherein a clear paint, having an epoxy group-containing acrylic resin as the base resin and containing a polycarboxylic acid as a curing agent, is used as the acrylic powder-based clear paint.

26. The process of forming a coated film according to Claim 25, wherein dodecanedicarboxylic acid is used as the polycarboxylic acid.

27. A process of producing a coated product coated with a powder paint, **characterized in** comprising a step of coating the powder paint according to any one of Claims 1 to 10 onto a substrate made of metal material by electrostatic powder coating.

28. The process of producing a coated product according to Claim 27, further comprising a step of forming a primer layer onto the substrate in advance to the electrostatic powder coating step.

29. The process of producing a coated product according to Claim 28, wherein the primer layer is formed with a powder paint.

30. The process of producing a coated product according to Claim 28, wherein the primer layer is formed with a powder paint having an epoxy resin hardening-type polyester resin or acid hardening-type epoxy group-containing acrylic resin as the main component of the base paint powder.

31. The process of producing a coated product according to any one of Claims 27 to 30, further comprising a step of forming a top clear layer as the utmost outer layer.

32. The process of producing a coated product according to Claim 31, wherein the top clear layer is formed with an acrylic solvent-based clear paint or acrylic powder-based clear paint.

33. The process of producing a coated product according to Claim 32, wherein a polyisocyanate hardening-type clear paint is used as the acrylic solvent-based clear paint.

34. The process of producing a coated product according to Claim 32, wherein an acid hardening-type having epoxy groups is used as the acrylic powder-based clear paint.

35. The process of producing a coated product according to Claim 32, wherein a clear paint, having an epoxy group-containing acrylic resin as the base resin and containing a polycarboxylic acid as a curing agent, is used as the acrylic powder-based clear paint.

36. The process of producing a coated product according to Claim 35, wherein dodecanedicarboxylic acid is used as the polycarboxylic acid.

37. A coated product, **characterized in** being produced by the process according to any one of Claims 27 to 36.
